# NEUE EUROPÄISCHE PATENTSCHRIFT

(11) **EP 2 994 495 B2**
(45) Veröffentlichungstag und Bekanntmachung des Hinweises auf die Entscheidung über den Einspruch: **22.09.2021**
(45) Hinweis auf die Patenterteilung: 10.10.2018
(21) Anmeldenummer: 14716335.6
(22) Anmeldetag: 10.04.2014
(51) Int. Cl.: C08G 18/71, C08G 18/80, C08G 18/10, C08G 18/12, C08G 18/24, C09D 175/04, C08G 18/28

(54) **VERNETZUNG VON IPMS ADDUKTEN MIT AMINOSILANEN**
CROSSLINKING OF IPMS ADDUCTS AND AMINOSILANES
RÉTICULATION D'ADDUITS D'IPMS AVEC DES AMINOSILANES

(30) Priorität: 07.05.2013 DE 102013208356
(43) Veröffentlichungstag der Anmeldung: 16.03.2016
(73) Patentinhaber: Evonik Operations GmbH, 45128 Essen (DE)
(72) Erfinder: HALLACK, Markus, 46514 Schermbeck (DE); BIEBEL, Andrea, 64295 Darmstadt (DE)
(74) Vertreter: Evonik Patent Association
(86) Internationale Anmeldenummer: PCT/EP2014/057239
(87) Internationale Veröffentlichungsnummer: WO 2014/180623

(56) Entgegenhaltungen:
- WO-A1-02/077072
- DE-A1-102008 032 580
- US-A1- 2004 132 949

## Beschreibung

Die vorliegende Erfindung betrifft Beschichtungsmittel mindestens enthaltend A) ein Addukt aus Isocyanatosilanen an Hydroxy-funktionelle Verbindungen, B) eine Zinn-haltige Verbindung und C) ein Aminosilan, die Verwendung der Beschichtungsmittel sowie die erhaltenen Beschichtungen.

Zur dauerhaft schützenden Beschichtung von wärmeempfindlichen Substraten werden heute in der Regel 2-Komponenten-Lacke eingesetzt, die bereits bei Umgebungstemperatur aushärten können. Sie bestehen aus Lackharzen mit funktionellen Gruppen und Vernetzern, die bereits bei Umgebungstemperatur mit diesen funktionellen Gruppen unter Vernetzung reagieren. Aufgrund ihrer hohen Reaktivität besitzen diese Vernetzer häufig ein intrinsisches toxikologisches Gefährdungspotential für den Menschen. Daher besteht der Wunsch, alternative Beschichtungssysteme bereit zu stellen, die ein vergleichbar breites Anwendungsspektrum besitzen, bei gleichzeitig hoher Beständigkeit der ausgehärteten Beschichtungen gegen Chemikalien- oder Witterungseinflüsse aber auch gegen mechanische Beanspruchung. Als technische Benchmark sind die seit langem bekannten aliphatischen 2K-PUR Systeme heranzuziehen.

Ein alternatives 2K-System beschreibt die DE 10 2007 013 262. Es handelt sich hierbei aber um 2K-Systeme, die erst bei Temperaturen von 140 °C ausgehärtet werden können.

WO 2010/ 004038 beschreibt härtbare Zusammensetzungen aus alkoxy- und/oder acyloxysilanterminierten Polymeren. Die dort beschriebenen Zusammensetzungen eignen sich aber nur für die Herstellung von Verklebungen, als reine Beschichtungsmittel sind sie ungeeignet.

In der US 2004/0132949 A1 werden Polyetherurethane mit einer reaktiven Silangruppe offenbart, die in Kombination mit Polyetherurethanen, die zwei oder mehr reaktive Silangruppen enthalten, zur Herstellung von feuchtigkeitshärtbaren Urethanen, die sich als Dichtstoffe, Klebstoffe und Beschichtungen eignen, verwendet werden können.

Die WO 02/077072 A1 offenbart silanterminierte Hybridpolymere auf Basis von Polydiorganosiloxan-Urethan-Copolymeren mit feuchtigkeitshärtenden Silanendgruppen und deren Verwendung als feuchtigkeitshärtendes Polymer, als Bestandteil in Kleb und Dichtstoffen, als Basisstoff für thermoplastische und vulkanisierte Elastomere, für Membrane, als härtbare Zusatzstoffe in Polymerblends, für Beschichtungsanwendungen oder als biokompatible Materialien.

Aufgabe der vorliegenden Erfindung ist die Bereitstellung eines Beschichtungsmittels, das vorzugsweise bereits bei Temperaturen im Bereich von 0 °C bis 40 °C ausgehärtet werden kann und im ausgehärteten Zustand zu Beschichtungen mit hoher mechanischer Beständigkeit führt. Die genannte Aufgabe wird durch Beschichtungsmittel der vorliegenden Erfindung gelöst.

Somit ist ein erster Gegenstand der vorliegenden Erfindung ein Beschichtungsmittel mindestens enthaltend A) ein Addukt aus Isocyanatosilanen an Hydroxy-funktionelle Verbindungen, B) eine Zinn-haltige Verbindung und C) ein Aminosilan, wobei die Hydroxy-funktionellen Verbindungen ausgewählt sind aus Monoalkoholen, die ausgewählt sind aus monofunktionellen verzweigten oder linearen Alkoholen oder Mischungen aus diesen mit 1 bis 22 Kohlenstoffatomen, Diolen, die ausgewählt sind aus difunktionellen verzweigten oder linearen Alkoholen oder Mischungen aus diesen mit 1 bis 22 Kohlenstoffatomen, Triolen, die ausgewählt sind aus trifunktionellen verzweigten oder linearen Alkoholen oder Mischungen aus diesen mit 1 bis 22 Kohlenstoffatomen, und Tetrolen, die ausgewählt sind aus tetrafunktionellen verzweigten oder linearen Alkoholen oder Mischungen aus diesen mit 1 bis 22 Kohlenstoffatomen, und wobei die Menge an Komponente C) in dem Beschichtungsmittel 10 bis 20 Gew.-% bezogen auf das Beschichtungsmittel beträgt.

Es hat sich überraschend gezeigt, dass Beschichtungsmittel enthaltend die oben Komponenten A) bis C) bereits bei 0°C zu stabilen Beschichtungen führen. Dabei handelt es sich bei den erfindungsgemäßen Beschichtungsmitteln um einkomponentige Systeme, die einfach zu applizieren sind. Aufgrund der niedermolekularen Anteile der Beschichtungsmittel sind diese im Hinblick auf eine spätere Anwendung ohne zusätzliche organische Lösungsmittel formulierbar und verarbeitbar. Somit ist es möglich, einen VOC-Gehalt von unter 100 g/l zu realisieren.

Wesentlicher Gegenstand der vorliegenden Erfindung ist die spezifische Kombination aus
A) einem Addukt aus Isocyanatosilanen an Hydroxy-funktionelle Verbindungen,
B) einer Zinn-haltigen Verbindung und C) einem Aminosilan, wobei die Menge an Komponente C) in dem Beschichtungsmittel 10 bis 20 Gew.-% bezogen auf das Beschichtungsmittel beträgt.

Bei der Komponente A) der erfindungsgemäßen Beschichtungsmittel handelt es sich um Addukte aus Isocyanatosilanen an Hydroxy-funktionelle Verbindungen. Derartige Addukte sind dem Fachmann bekannt.

Vorzugsweise handelt es sich bei dem Isocyanatosilan um eine Verbindung der Formel (I)

OCN-(Alkyl)-Si(Alkoxy)₃ (I)

worin Alkyl lineare oder verzweigte Alkylenketten mit 1-4 Kohlenstoffatomen, und worin Alkoxy gleichzeitig oder unabhängig voneinander Methoxy-, Ethoxy-, Propoxy- oder Butoxy-Gruppen bedeuten.

Als Verbindungen der Formel (I) OCN-(Alkyl)-Si(Alkoxy)₃ eignen sich grundsätzlich alle der vorab beschriebenen möglichen Verbindungen. Besonders bevorzugt ist Alkoxy ausgewählt aus Methoxy- und Ethoxygruppen.
Geeignete Verbindungen der Formel (I) sind beispielsweise Isocyanatoalkylalkoxysilane, die insbesondere ausgewählt sind aus der Gruppe umfassend 3-Isocyanatopropyltrimethoxysilan, 3-Isocyanatopropyltriethoxysilan, 3-Isocyanatopropyltriisopropoxysilan, 2-Isocyanatoethyltrimethoxysilan, 2-Isocyanatoethyltriethoxysilan, 2-Isocyanatoethyltriisopropoxysilan, 4-Isocyanatobutyltrimethoxysilan, 4-Isocyanatobutyltriethoxysilan, 4-Isocyanatobutyltriisopropoxysilane, Isocyanatomethyltrimethoxysilan, Isocyanatomethyltriethoxysilan und/oder Isocyanatomethytriisopropoxysilan.

Besonders bevorzugt werden 3-Isocyanatopropyltrialkoxysilane, insbesondere 3-Isocyanatopropyltrimethoxysilan und/oder 3-Isocyanatopropyltriethoxysilan als Verbindung der Formel (I) eingesetzt.

Die vorab genannten Isocyanatosilane liegen als Addukt an Hydroxy-funktionelle Verbindungen gebunden vor.

Als entsprechende Hydroxy-funktionelle Verbindungen eignen sich einwertige oder mehrwertige Alkohole sowie Polyole.

Geeignete Hydroxy-funktionelle Verbindungen sind Mono-alkohole, Diole, Triole und Tetrole.

Im Falle der Mono-alkohole handelt es sich um monofunktionelle verzweigte oder lineare Alkohole oder Mischungen aus diesen mit 1 bis 22 Kohlenstoffatomen, insbesondere um Methanol, Ethanol und Propanol.

Als Diole eignen sich um difunktionelle verzweigte oder lineare Alkohole oder Mischungen aus diesen mit 1 bis 22 Kohlenstoffatomen, insbesondere Ethylenglykol, Propylenglykol und Neopentylglykol.

Als Triole eignen sich trifunktionelle verzweigte oder lineare Alkohole oder Mischungen aus diesen mit 1 bis 22 Kohlenstoffatomen, insbesondere Trimetylolpropan und Glyzerin.

Als Tetrole eignen sich tetrafunktionelle verzweigte oder lineare Alkohole oder Mischungen aus diesen mit 1 bis 22 Kohlenstoffatomen, insbesondere Pentaerythritol.

Die Hydroxylzahl (OHZ) wird bestimmt nach DIN 53240-2.
Bei diesem Verfahren wird die Probe mit Essigsäureanhydrid in Gegenwart von 4-Dimethylaminopyridin als Katalysator umgesetzt, wobei die Hydroxylgruppen acetyliert werden. Dabei entsteht pro Hydroxylgruppe ein Molekül Essigsäure, während die anschließende Hydrolyse des überschüssigen Essigsäureanhydrids zwei Moleküle Essigsäure liefert. Der Verbrauch an Essigsäure wird titrimetrisch aus der Differenz zwischen Hauptwert und einem parallel durchzuführenden Blindwert ermittelt.
Die zahlenmittleren Molekulargewichte werden nach DIN 55672-1 mittels Gelpermeationschromatographie in Tetrahydrofuran als Eluent und Polystyrol zur Kalibrierung bestimmt.

Darüber hinaus können auch Mischungen der oben genannten Hydroxylfunktionellen Verbindungen eingesetzt werden.

Bei den Addukten A) sind vorzugsweise mindestens 30 % der OH-Gruppen der Hydroxyl-haltigen Verbindungen, insbesondere bevorzugt alle OH-Gruppen durch Reaktion mit Isocyanatosilanen umgesetzt.

Die Herstellung der Addukte A) erfolgt im Allgemeinen lösemittelfrei oder unter Verwendung von nicht-protischen Lösemitteln, wobei die Umsetzung diskontinuierlich oder kontinuierlich erfolgen kann. Die Reaktion kann bei Raumtemperatur, das heißt bei Temperaturen im Bereich von 20 - 25 °C, durchgeführt werden, bevorzugt werden jedoch höhere Temperaturen im Bereich 30 - 150 °C, insbesondere im Bereich von 50 - 150 °C verwendet. Zur Beschleunigung der Reaktion können vorteilhaft in der Urethanchemie bekannte Katalysatoren wie Sn-, Bi-, Zn- und andere Metallcarboxylate, tert.-Amine wie beispielsweise 1,4-Diazabicyclo[2.2.2]octan (DABCO), Triethylamin etc. eingesetzt werden. Die Reaktion wird bevorzugt unter Ausschluss von Wasser durchgeführt.

Die Umsetzung der Isocyanatosilane und der Hydroxy-funktionellen Verbindungen zur Bildung der Addukte A) erfolgt dabei insbesondere derart, dass das Verhältnis von OH-Gruppen aus den Hydroxy-funktionellen Verbindungen zu NCO-Gruppen aus den Isocyanatosilanen von 0,8:1 bis 1,2:1, bevorzugt 0,9:1 bis 1,1:1, beträgt, wobei die stöchiometrische Umsetzung ganz besonders bevorzugt ist. Somit erfolgt insbesondere bevorzugt eine vollständige Umsetzung aller OH-Gruppen der Hydroxy-funktionellen Verbindungen mit NCO-Gruppen der Isocyanatosilane, insbesondere jene der Verbindungen der Formel (I).

Bei der genannten Umsetzung reagieren die NCO-Gruppen der Isocyanatosilane mit den OH-Gruppen der Hydroxy-funktionellen Verbindungen unter Ausbildung von NH-CO-O-Gruppen, die die genannten Verbindungen miteinander verknüpfen.
Die Addukte A) sind insbesondere bei Temperaturen oberhalb von 0 °C flüssig. Es handelt sich dabei um nicht kristallisierende, niedermolekulare Verbindungen. In Abhängigkeit der gewählten Stöchiometrie beider Reaktionspartner kann das Reaktionsprodukt noch freie Hydroxyl- oder Isocyanatgruppen enthalten.

In einer bevorzugten Ausführungsform sind die Addukte A) im Wesentlichen frei von Hydroxyl- oder Isocyanatgruppen. Die Addukte sind in lösemittelfreier Form niedrigbis mittelviskos und bei 0 °C flüssig. Zwecks besserer Handhabbarkeit können die Produkte jedoch mit Lösemitteln, die wie Alkohole auch protisch sein können, versetzt sein. Die Festkörpergehalte derartiger Zubereitungen betragen vorzugsweise > 80 Gew.-% und weisen dabei bevorzugt eine maximale Viskosität von 500 mPas (DIN EN/ISO 3219 23 °C) auf.

Die Menge an Komponente A) in dem erfindungsgemäßen Beschichtungsmittel beträgt bevorzugt 10 bis 90 Gew.-%, insbesondere bevorzugt 10 bis 80 Gew.-%, jeweils bezogen auf das Beschichtungsmittel.

Bei der Komponente B) der erfindungsgemäßen Beschichtungsmittel handelt es sich um eine Zinn-haltige Verbindung, bevorzugt um eine Organozinnverbindung. Besonders bevorzugt handelt es sich um mindestens eine organische Zinnverbindung der Formel (II)

R¹₄₋ₐSnXₐ (II)

wobei a 1, 2 oder 3 ist, R¹ unabhängig ausgewählt wird aus der Gruppe, die besteht aus linearen oder verzweigten, gegebenenfalls substituierten, C1-C30-Alkylgruppen-, C5-C14-Cycloalkylgruppen oder C6-C14-Arylgruppen, Triorganylsilyl- sowie C1-C30 Diorganylalkoxysilyl-Gruppen, und X ausgewählt wird aus der Gruppe, die besteht aus Halogen, -OR², -OC(O)R³, -OH, -SR⁴, -NR⁵₂, -NHR⁶, -OSiR⁷₃, -OSi(OR⁸)₃, worin die Substituenten R² bis R⁸ jeweils unabhängig voneinander ausgewählt werden aus gegebenenfalls substituierten C1-C8-Alkyl-, C6-C14-Aryl- und/oder C2-C8-Alkenylgruppen.

Die in der Definition der vorstehend genannten organischen Zinnverbindungen erwähnten linearen oder verzweigten, gegebenenfalls substituierten, C1-C30-Alkylgruppen schließen solche mit 1 bis 30 Kohlenstoffatomen ein, wie zum Beispiel Methyl, Ethyl, Chlorethyl, n-Propyl, iso-Propyl, n-Butyl, iso-Butyl, Pentyl, Hexyl, Heptyl, Ethylhexyl, Octyl, Decyl, Undecyl, Dodecyl, Tridecyl, etc. Bevorzugt ist Butyl, Hexyl oder Octyl.

Die in der Definition der vorstehend genannten organischen Zinnverbindungen erwähnten C5-C14-Cycloalkylgruppen schließen mono-oder polycyclische Alkylgruppen ein, wie zum Beispiel Cylopentyl, Cyclohexyl, Cyclohexylethyl Cyclooctyl, Decalinyl, Hydrindanyl, Bicyclo[2.2.1]heptanyl, Bicyclo[2.2.2]octanyl, Bicyclo[4.2.3]nonyl etc.

C6-C14-Arylgruppen umfassen z. B. Phenyl-und Naphthenyl oder Fluorenylgruppen.

Bevorzugte Beispiele geeigneter Zinn-haltiger Verbindungen der Komponente B) sind Alkylzinnchloride und deren Mischungen, beispielsweise Di-n-butylzinndichlorid sowie Di-n-octylzinndichlorid, oder Alkylzinnoxide und deren Mischungen, beispielsweise Di-n-butylzinnoxid sowie Di-n-octylzinnoxid, Dibutylzinncarboxylate, beispielsweise Di-n-butylzinndiacetat, Di-n-butylzinndilaurat, Di-n-butylzinnmaleat, Di-n-butylzinn-bis-2-ethylhexanoat sowie Di-n-butylzinndineodecanoat, Dioctylzinncarboxylate, wie Di-n-octylzinndiacetat, Di-n-octylzinndilaurat, Di-n-octylzinnmaleat, Di-n-octylzinn-bis-2-ethylhexanoat oder Di-n-octylzinndineodecanoat, ferner Dialkylzinnkomplexe, beispielsweise Di-n-butylzinndiacetylacetonat. In den erfindungsgemäßen Mischungen sind in der Regel solche Zinnverbindungen besonders vorteilhaft einsetzbar, die sich in den erfindungsgemäßen Beschichtungsmitteln sofort oder nach Erwärmen lösen.

Ganz besonders bevorzugte Verbindungen der Komponente B) sind Ketonate.

Die Menge der Zinn-haltigen Verbindung B) in dem erfindungsgemäßen Beschichtungsmittel beträgt bevorzugt 0,01 bis 1,0 Gew.-%, insbesondere bevorzugt 0,1 bis 1 Gew.-%, jeweils bezogen auf das Beschichtungsmittel.

Bei der Komponente C) der erfindungsgemäßen Beschichtungsmittel handelt es sich um ein Aminosilan, insbesondere handelt es sich bei dem Aminosilan um Aminosilane oder Aminoalkylsilane der allgemeinen Formel (III)

AₘSiYₙ (III),

worin
A eine substituierte oder unsubstituierte Aminoalkylgruppe, eine substituierte oder unsubstituierte Diaminodialkylgruppe oder substituierte oder unsubstituierte Triaminotrialkylgruppe darstellt, die Gruppen Y gleich oder verschieden sind, wobei Y für OH, ONa, OK, OR', OCOR', OSiR'₃, Cl, Br, I oder NR'₂ steht, m gleich 1 oder 2 und n gleich 1, 2 oder 3 sind, mit der Maßgabe m+n = 4, wobei die Gruppe R' unabhängig Wasserstoff, lineare oder verzweigte Alkyl-, Cycloalkyl-, Alkenyl-, Cycloalkenyl-, Alkinyl-, Cycloalkinyl-, Aryl- oder Heteroarylgruppen sind, jeweils 1 bis 18 C-Atomen aufweisen und jeweils ggf. substituiert sein können.

Vorzugsweise ist m gleich 1 und n gleich 3. Weiterhin bevorzugt ist Y ausgewählt aus OH oder OR', wobei OR' besonders bevorzugt ist. In diesem Falle ist R' insbesondere ausgewählt aus Methyl- oder Ethylgruppen, wobei Methylgruppen insbesondere bevorzugt sind.

Solche Aminosilane oder Aminoalkylsilane sind beispielsweise, aber nicht ausschließlich, 3-Aminopropyltrimethoxysilan, 3-Aminopropyltriethoxysilan, 2-Aminoethyl-3-aminopropyltrimethoxysilan, 3-Aminopropyl(diethoxymethoxysilan), 3-Aminopropyl(tripropoxysilan), 3-Aminopropyl(dipropoxymethoxysilan), 3-Aminopropyl(tridodecanoxysilan), 3-Aminopropyl(tritetradecanoxysilan), 3-Aminopropyl(trihexadecanoxysilan), 3-Aminopropyl(trioctadecanoxysilan), 3-Aminopropyl(didodecanoxy)tetradecanoxysilan, 3-Aminopropyl(dodecanoxy)-tetradecanoxy(hexadecanoxy)silan, 3-Aminopropyl(dimethoxymethylsilan), 3-Aminopropyl(methoxydimethylsilan), 3-Aminopropyl(hydroxydimethylsilan), 3-Aminopropyl(diethoxymethylsilan), 3-Aminopropyl(ethoxydimethylsilan), 3-Aminopropyl(dipropoxymethylsilan), 3-Aminopropyl(propoxydimethylsilan), 3-Aminopropyl(diisopropoxymethylsilan), 3-Aminopropyl(isopropoxydimethylsilan), 3-Aminopropyl(dibutoxymethylsilan), 3-Aminopropyl(butoxydimethylsilan), 3-Aminopropyl(disiobutoxymethylsilan), 3-Aminopropyl(isobutoxydimethylsilan), 3-Aminopropyl(didodecanoxymethylsilan), 3-Aminopropyl(dodecanoxydimethylsilan), 3-Aminopropyl(ditetradecanoxymethylsilan), 3-Aminopropyl(tetradecanoxy-dimethylsilan), 2-Aminoethyl(trimethoxysilan), 2-Aminoethyl(triethoxysilan), 2-Aminoethyl(diethoxymethoxysilan), 2-Aminoethyl(tripropoxysilan), 2-Aminoethyl(dipropoxymethoxysilan), 2-Aminoethyl(tridodecanoxysilan), 2-Aminoethyl(tritetradecanoxysilan), 2-Aminoethyl(trihexadecanoxysilan), 2-Aminoethyl(trioctadecanoxysilan), 2-Aminoethyl(didodecanoxy)tetradecanoxysilan, 2-Aminoethyl(dodecanoxy)tetradecanoxy(hexadecanoxy)silan, 2-Aminoethyl(dimethoxymethylsilan), 2-Aminoethyl(methoxydimethylsilan), 2-Aminoethyl(diethoxymethylsilan), 2-Aminoethyl(ethoxydimethylsilan), 1-Aminomethyl(trimethoxysilan), 1-Aminomethyl(triethoxysilan), 1-Aminomethyl(diethoxymethoxysilan), 1-Aminomethyl(dipropoxymethoxysilan), 1-Aminomethyl(tripropoxysilan), 1-Aminomethyl(trimethoxysilan), 1-Aminomethyl(dimethoxymethylsilan), 1-Aminomethyl(methoxydimethylsilan), 1-Aminomethyl(diethoxymethylsilan), 1-Aminomethyl(ethoxydimethylsilan), 3-Aminobutyl(trimethoxysilan), 3-Aminobutyl(triethoxysilan), 3-Aminobutyl(diethoxymethoxysilan), 3-Aminobutyl(tripropoxysilan), 3-Aminobutyl(dipropoxymethoxysilan), 3-Aminobutyl(dimethoxymethylsilan), 3-Aminobutyl(diethoxymethylsilan), 3-Aminobutyl(dimethylmethoxysilan), 3-Aminobutyl(dimethylethoxysilan), 3-Aminobutyl(tridodecanoxysilan), 3-Aminobutyl(tritetradecanoxysilan), 3-Aminobutyl(trihexadecanoxysilan), 3-Aminobutyl(didodecanoxy)tetradecanoxysilan, 3-Aminobutyl(dodecanoxy)tetra-decanoxy(hexadecanoxy)silan, 3-Amino-2-methyl-propyl(trimethoxysilan), 3-Amino-2-methyl-propyl(triethoxysilan), 3-Amino-2-methyl-propyl(diethoxymethoxysilan), 3-Amino-2-methyl-propyl(tripropoxysilan), 3-Amino-2-methylpropyl(dipropoxymethoxysilan), 3-Amino-2-methyl-propyl(tridodecanoxysilan), 3-Amino-2-methyl-propyl(tritetradecanoxysilan), 3-Amino-2-methylpropyl(trihexadecanoxysilan), 3-Amino-2-methyl-propyl(trioctadecanoxysilan), 3-Amino-2-methyl-propyl(didodecanoxy)tetradecanoxysilan, 3-Amino-2-methyl-propyl(dodecanoxy)tetradecanoxy(hexadecanoxy)silan, 3-Amino-2-methylpropyl(dimethoxymethylsilan), 3-Amino-2-methyl-propyl(methoxydimethylsilan), 3-Mercapto-2-methyl-propyl(diethoxymethylsilan), 3-Mercapto-2-methylpropyl(ethoxydimethylsilan), 3-Mercapto-2-methyl-propyl(dipropoxymethylsilan), 3-Amino-2-methyl-propyl(propoxydimethylsilan), 3-Amino-2-methylpropyl(diisopropoxymethylsilan), 3-Amino-2-methyl-propyl(isopropoxydimethylsilan), 3-Amino-2-methyl-propyl(dibutoxymethylsilan), 3-Amino-2-methylpropyl(butoxydimethylsilan), 3-Amino-2-methyl-propyl(disiobutoxymethylsilan), 3-Amino-2-methyl-propyl(isobutoxydimethylsilan), 3-Amino-2-methylpropyl(didodecanoxymethylsilan), 3-Amino-2-methyl-propyl(dodecanoxy-dimethylsilan), 3-Amino-2-methyl-propyl(ditetradecanoxymethylsilan) oder 3-Amino-2-methyl-propyl (tetradecanoxydimethyl-silan), triaminofunktionelles Propyltrimethoxysilan, Bis(3-trimethoxysilylpropyl)-amin, Bis(3-triethoxysilylpropyl)-amin, N-Benzyl-N-(2-aminoethyl)-3-aminopropyltrimethoxysilan-Hydrochlorid, N-Benzyl-N-(2-aminoethyl)-3-aminopropyltrimethoxysilan-Hydroacetat, N-(n-Butyl)-3-aminopropyltrimethoxysilan, 3-Aminopropylmethyldiethoxysilan, N-Vinylbenzyl-N-(2-aminoethyl)-3-aminopropylpolysiloxan und N-(2-Aminoethyl)-3-aminopropylmethyldimethoxysilan.

Bevorzugte Aminosilane oder Aminoalkylsilane sind substituierte oder unsubstituierte Aminosilan-Verbindungen, insbesondere 3-Aminopropyltrimethoxysilan, 3-Aminopropyltriethoxysilan, 3-Aminopropylmethyldiethoxysilan, N-(2-Aminoethyl)-3-aminopropyltrimethoxysilan, 2-Aminopropyl-3-aminopropyltrimethoxysilan, 2-Aminopropyl-3-aminopropyltriethoxysilan, 2-Aminoethyl-2-aminoethyl-3-aminopropyltrimethoxysilan, 2-Aminoethyl-2-aminoethyl-3-aminopropyltriethoxysilan und N-(n-Butyl)-3-aminopropyltrimethoxysilan. Besonders bevorzugt werden 3-Aminopropyltrimethoxysilan (DYNASYLAN® AMMO), 3-Aminopropyltriethoxysilan (DYNASYLAN® AMEO), 3-Aminopropylmethyldiethoxysilan (DYNASYLAN® 1505), N-(n-Butyl)-3-aminopropyltrimethoxysilan (DYNASYLAN® 1189) und N-(2-Aminoethyl)-3-aminopropyltrimethoxysilan (DYNASYLAN® DAMO), (H₃CO)₃Si(CH₂)₃NH(CH₂)₃Si(OCH₃)₃ (Bis-AMMO), (H₅C₂O)₃Si(CH₂)₃NH(CH₂)₃Si(OC₂H₅)₃ (Bis-AMEO), (H₃CO)₃Si(CH₂)₃NH(CH₂)₂NH(CH₂)₂NH(CH₂)₃Si(OCH₃)₃ (Bis-DAMO), jeweils der Fa. Evonik Industries AG, als Aminosilane C) eingesetzt.

Die Menge an Komponente C) in dem erfindungsgemäßen Beschichtungsmittel beträgt 10 bis 20 Gew.-%, jeweils bezogen auf das Beschichtungsmittel.

Weiterhin kann das erfindungsgemäße Beschichtungsmittel optional eine oder mehrere Bindemittel-Komponenten enthalten. Grundsätzlich eignen sich als Bindemittel-Komponenten alle dem Fachmann bekannten Arten von Bindemitteln, beispielsweise auch thermoplastische, das heißt nicht vernetzbare Bindemittel, die üblicherweise ein mittleres Molekulargewicht > 10000 g/mol aufweisen. Bevorzugt werden jedoch Bindemittel, die über reaktive funktionelle Gruppen mit aciden Wasserstoffatomen verfügen, eingesetzt. Geeignete Bindemittel der genannten Art weisen beispielsweise mindestens eine, bevorzugt jedoch zwei oder mehr Hydroxylgruppen auf. Weitere geeignete funktionelle Gruppen des Bindemittels sind beispielsweise Trialkoxysilan-Funktionalitäten.

Als Bindemittel mit funktionellen Gruppen werden bevorzugt Hydroxylgruppen-haltige Polymere, insbesondere Hydroxylgruppen-haltige Polyester, Polyether, Polyacrylate, Polycarbonate und Polyurethane mit einer OH-Zahl von 20 bis 500 mg KOH/g und einer mittleren Molmasse von 250 bis 6000 g/Mol eingesetzt. Besonders bevorzugt werden im Rahmen der vorliegenden Erfindung Hydroxylgruppen-haltige Polyester oder Polyacrylate mit einer OH-Zahl von 20 bis 150 mg KOH/g und einem mittleren Molekulargewicht von 500 bis 6000 g/mol als Bindemittelkomponenten eingesetzt.

Als hydroxylgruppenhaltige (Meth)acryl-Copolymerisate können Harze mit einer Monomerzusammensetzung, wie sie z. B. in WO 93/15849 (S. 8, Zeile 25 bis S. 10, Zeile 5), oder auch in DE 195 29124 beschrieben sind, verwendet werden. Dabei sollte die durch anteilige Verwendung von (Meth)acrylsäure als Monomer einzustellende Säurezahl des (Meth)acryl-Copolymerisates 0 - 30, vorzugsweise 3 - 15 mg KOH/g betragen. Das zahlenmittlere Molgewicht (ermittelt durch Gelpermeationschromatographie gegen einen Polystyrolstandard) des (Meth)acryl-Copolymerisates beträgt vorzugsweise 2000 - 20000 g/mol, die Glasübergangstemperatur beträgt vorzugsweise - 40°C bis + 60 °C. Der durch anteilige Verwendung von Hydroxyalkyl(meth)acrylaten einzustellende Hydroxylgehalt der erfindungsgemäß zu verwendenden (Meth)acryl-Copolymerisate beträgt vorzugsweise 70 - 250 mg KOH/g, besonders bevorzugt 90 - 190 mg KOH/g.

Erfindungsgemäß geeignete Polyesterpolyole sind Harze mit einer Monomerzusammensetzung aus Di- und Polycarbonsäuren und Di- und Polyolen, wie sie z. B. in Stoye/Freitag, Lackharze, C. Hanser Verlag, 1996, S. 49 oder auch in WO 93/15849 beschrieben sind. Als Polyesterpolyole können auch Polyadditionsprodukte von Caprolacton an niedermolekulare Di- und Triole, wie sie z. B. unter der Bezeichnung CAPA® (Perstorp) erhältlich sind, eingesetzt werden. Das rechnerisch bestimmte zahlenmittlere Molgewicht beträgt vorzugsweise 500 - 5000 g/mol, besonders bevorzugt 800 - 3000 g/mol, die mittlere Funktionalität beträgt vorzugsweise 2,0 - 4,0, bevorzugt 2,0 - 3,5.

Als erfindungsgemäß zu verwendende urethan- und estergruppenhaltige Polyole kommen prinzipiell auch solche zum Einsatz, wie sie in EP 140 186 beschrieben sind. Bevorzugt werden urethan- und estergruppenhaltige Polyole, zu deren Herstellung HDI, IPDI, Trimethylhexamethylendiisocyanat (TMDI) oder (H₁₂-MDI) verwendet werden, eingesetzt. Das zahlenmittlere Molgewicht beträgt vorzugsweise 500-2000 g/mol, die mittlere Funktionalität liegt insbesondere im Bereich von 2,0 - 3,5.
Selbstverständlich können auch Mischungen der vorab beschriebenen Bindemittel eingesetzt werden. Bevorzugte Bindemittel sind Hydroxylgruppen-haltige Polyester und Polyacrylate, allein oder in Mischungen.

Der Anteil etwaiger zusätzlicher Bindemittel in dem erfindungsgemäßen Beschichtungsmittel beträgt insbesondere 5-60 Gew.-%, bezogen auf das Beschichtungsmittel, insbesondere 10 bis 40 Gew.-%.

Das erfindungsgemäße Beschichtungsmittel kann zusätzlich in der Lacktechnologie bekannte Hilfsstoffe und/oder Zusatzstoffe wie Stabilisatoren, Lichtschutzmittel, Katalysatoren, Füllstoffe, Pigmente, Verlaufsmittel oder Rheologiehilfsmittel, wie z. B. sog. "sag control agents", Mikrogele oder pyrogenes Siliciumdioxid, in typischen Konzentrationen enthalten. Falls erforderlich, können in dem erfindungsgemäßen Beschichtungsmittel auch in der Lacktechnologie übliche anorganische oder organische Farb- und/oder Effektpigmente eingearbeitet werden.

Die Hilfsstoffe und/oder Zusatzstoffe sind im Falle von pigmentfreien Beschichtungsmitteln, vorzugsweise in Mengen von 0,01 bis zu 90 Gew.-%, insbesondere 0,1 bis 20 Gew.-%, bezogen auf das Beschichtungsmittel, in dem erfindungsgemäßen Beschichtungsmittel enthalten.
Im Falle von pigment- und/oder füllstoffhaltigen Beschichtungsmitteln kann der Gehalt von Hilfsstoffen und/oder Zusatzstoffen 0,01 bis 99 Gew.-%, insbesondere 0,1 bis 90 Gew.-% betragen, bezogen auf das Beschichtungsmittel.

Weiterhin kann das erfindungsgemäße Beschichtungsmittel organische Lösemittel enthalten. Geeignete Lösemittel sind z. B. Ketone, Ester, Alkohole oder Aromaten.

Die Lösemittel sind vorzugsweise in Mengen von 1 bis zu 50 Gew.-%, insbesondere 5 bis 75 Gew.-%, bezogen auf das Beschichtungsmittel, in dem erfindungsgemäßen Beschichtungsmittel enthalten. Die Menge der Lösemittel orientiert sich an der einzustellenden Applikationsviskosität des Beschichtungsmittels.

Die Summe aller Anteile der Komponenten A) bis C) sowie der zusätzlich möglichen Bindemittel, Hilfs- und Zusatzstoffe und Lösemittel ergibt 100 Gew.-%.

Die Herstellung der erfindungsgemäßen Beschichtungsmittel erfolgt durch Mischung der vorab beschriebenen Komponenten. Das Mischen kann in dem Fachmann bekannten Mischern erfolgen, beispielsweise Rührbehältern, Dissolvern, Perlmühlen, Walzenstühlen, etc., aber auch kontinuierlich mittels Statikmischern.

Die erfindungsgemäßen Beschichtungsmittel können insbesondere zur Beschichtung von Holz, Kunststoff, Glas, Metall eingesetzt werden. Auf diese Weise werden bereits bei Temperaturen unterhalb von 100 °C vernetzende Beschichtungen erhalten.

Somit ist ein weiterer Gegenstand der Erfindung die Verwendung von Beschichtungsmitteln aus A) einem Addukt aus Isocyanatosilanen an Hydroxy-funktionelle Verbindungen, B) einer Zinn-haltigen Verbindung und C) einem Aminosilan, wobei die Beschichtungsmittel aus den Komponenten A) bis C) insbesondere bei Temperaturen von 0 °C bis 80 °C härtbar sind, zur Beschichtung von Holz, Kunststoff, Glas oder Metall.

Die auf Basis der vorab genannten Beschichtungsmittel erhaltenen Beschichtungen sind gekennzeichnet durch eine hohe Beständigkeit gegenüber mechanischer Beanspruchung auf. Darüber hinaus zeigen sie eine sehr gute Beständigkeit gegenüber Chemikalien, eine außergewöhnlich gute Witterungsbeständigkeit und eine sehr gute Balance zwischen Härte und Flexibilität.

Beschichtungen enthaltend die erfindungsgemäßen Beschichtungsmittel sind ebenfalls Gegenstand der vorliegenden Erfindung.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.
Nachfolgend wird die vorliegende Erfindung anhand von Beispielen näher erläutert. Alternative Ausführungsformen der vorliegenden Erfindung sind in analoger Weise erhältlich.

### Beispiele:

### Herstellvorschrift der Beschichtungsmittel:

Die einzelnen Stoffe, je nach Rezeptur, werden nacheinander in eine 250 mL Glasflasche eingewogen und mit einem Laborrührer gut verrührt bis sich eine homogene gut durchmischte Lösung bildet.

### Herstellvorschrift der Beschichtungen:

Die einzelnen Beschichtungsstoffe werden mittels eines Vierkantfilmziehrahmens mit einer Nassschichtdicke von 100µm auf eine Glasplatte aufgetragen.
Die Beschichtungsfilme lagern über einen Zeitraum von 24 Stunden in einem klimatisierten Raum bei 23°C und einer relativen Luftfeuchte von 50%. Nach einem Abstand von einer 1 Stunde, 3 Stunden, 6 Stunden, 12 Stunden und nach einem Tag werden die Pendelhärten nach König an den hergestellten Filmen bestimmt, um das Trocknungsverhalten der einzelnen Proben zu ermitteln.
Die Ergebnisse der erhaltenen Beschichtungen sind in Tabelle 1 dargestellt. Die Bestimmung der Härte des Beschichtungsstoffes erfolgt durch Bestimmung der Pendelhärte:

Die Grundlage der Pendelhärte ist, dass die Schwingungsamplitude eines sich aufstützenden Pendels umso schneller abnimmt, je stärker der Untergrund dämpft und die Schwingungsenergie absorbiert wird.
Die Probenplatte (Beschichtungsfilm) wird auf dem Hubteller platziert. Mit dem von außen bedienbarem Hebelarm wird der Hubteller anschließend an das Pendel gefahren. Dieses wird bis zur Skalenposition 6° ausgelenkt und mit dem Drahtauslöser fixiert und anschließend gelöst. Ermittelt wird die Anzahl der Schwingungen, die das Pendel zum Abklingen von 6° auf 3° zur Senkrechten benötigt. Die Messung wird innerhalb der Probe an 2 verschiedenen Stellen durchgeführt. Durch Multiplikation der Schwingungen mit dem Faktor 1,4 wird die Pendeldämpfung nach König in Sekunden errechnet.

**Tabelle 1**

| **Beispiel** | **A*¹⁾** | **B*¹⁾** | **C** | **D*¹⁾** | **E*¹⁾** | **F*¹⁾** |
|---|---|---|---|---|---|---|
| Vestanat M 95 (1) | 100 | 90 | 89,7 | 50 | 45 | 44,9 |
| Dynasylan AMMO (2) | | 10 | 10 | | 5 | 5 |
| TIB Kat 226 (3) | | | 0,3 | | | 0,15 |
| Desmophen A 450 BA; 25% (4) | | | | 50 | 50 | 50 |
| Alle Angaben in Gewichtsprozent | | | | | | |
| | | | | | | |

| **Trocknungsbestimmung** | **Pendelhärte** | | | | | |
|---|---|---|---|---|---|---|
| 1h | flüssig | 19,6 / 29,4 | 44,8 / 44,8 | klebrig | 9,8 / 9,8 | 22,4 / 22,4 |
| 3h | flüssig | 32,2 / 40,6 | 46,2 / 47,6 | klebrig | 21,0 / 21,0 | 82,6 / 81,2 |
| 6h | flüssig | 33,6 / 35,0 | 85,4 / 84,0 | klebrig | 39,2 / 37,8 | 121,8 / 121,8 |
| 12h | flüssig | 43,4 / 42,0 | 112,0 / 113,4 | klebrig | 84,0 / 81,2 | 134,4 / 133,0 |
| 1d | flüssig | 81,2 / 84,0 | 134,4 / 140,0 | klebrig | 141,4 / 138,6 | 155,4 / 152,6 |

| | | | | | | |
|---|---|---|---|---|---|---|
| (1) Addukt aus Isocyanatopropytrimethoxysilan und 1,9-Nonandiol (Verhältnis Isocyanatopropytrimethoxysilan zu 1,9-Nonandiol entspricht 2:1) (2) 3-Aminopropyltrimethoxysilan der Fa. Evonik Industries AG (3) Di-n-butylzinndineodecanoat, TIB Chemicals AG (4) Hydroxylgruppenhaltiges Polyacrylat der Fa. Viverso *1) = nicht erfindungsgemäßes Beispiel | | | | | | |

### Ergebnis:

Die Ergebnisse zeigen, dass eine Kombination aus Vestanat M 95, Dynasylan AMMO und TIB Kat 226, Verhältnis: 90:10:0,3, Probe C, als Beschichtungsstoff ein gutes Trocknungsverhalten bei Raumtemperatur aufweist. Auch in Verbindung mit einem weiteren gelösten reaktiven Acrylharz Desmophen A 450, Probe F, sind mit dieser Kombination gute Trocknungseigenschaften zu erkennen.

Die Beschichtungsfilme Vestanat M 95, Probe A, und auch die Mischung Vestanat M 95 und Desmophen A 450 BA, Probe D, weisen nach 24 Stunden noch keine Antrocknung auf. Die Filme sind klebrig. Durch die Zugabe von Dynasylan AMMO, Probe B und Probe E, ist eine Antrocknung nach 1 Stunde zu erkennen und im weiteren Verlauf eine Durchtrocknung. Allerdings reichen die beiden Proben nicht an das gute Trocknungsverhalten der Proben C und F heran. Das Verwenden des Katalysators TIB Kat. 226 verbessert und beschleunigt die Trocknung nochmals deutlich.

## Patentansprüche

1. Beschichtungsmittel mindestens enthaltend A) ein Addukt aus Isocyanatosilanen an Hydroxy-funktionelle Verbindungen, B) eine Zinn-haltige Verbindung und C) ein Aminosilan, wobei die Hydroxy-funktionelle Verbindungen ausgewählt sind aus Monoalkoholen, die ausgewählt sind aus monofunktionellen verzweigten oder linearen Alkoholen oder Mischungen aus diesen mit 1 bis 22 Kohlenstoffatomen, Diolen, die ausgewählt sind aus difunktionellen verzweigten oder linearen Alkoholen oder Mischungen aus diesen mit 1 bis 22 Kohlenstoffatomen, Triolen, die ausgewählt sind aus trifunktionellen verzweigten oder linearen Alkoholen oder Mischungen aus diesen mit 1 bis 22 Kohlenstoffatomen, und Tetrolen, die ausgewählt sind aus tetrafunktionellen verzweigten oder linearen Alkoholen oder Mischungen aus diesen mit 1 bis 22 Kohlenstoffatomen, und wobei die Menge an Komponente C) in dem Beschichtungsmittel 10 bis 20 Gew.-% bezogen auf das Beschichtungsmittel beträgt.

2. Beschichtungsmittel gemäß Anspruch 1, **dadurch gekennzeichnet, dass** es sich bei dem Isocyanatosilan um eine Verbindung der der Formel (I)
OCN-(Alkyl)-Si(Alkoxy)₃ (I)
worin Alkyl lineare oder verzweigte Alkylenketten mit 1-4 Kohlenstoffatomen, Alkoxy: gleichzeitig oder unabhängig voneinander Methoxy-, Ethoxy-, Propoxy- oder Butoxy-Gruppen, handelt.

3. Beschichtungsmittel gemäß Anspruch 1 oder 2, **dadurch gekennzeichnet, dass** das Verhältnis von OH-Gruppen aus den Hydroxy-funktionellen Verbindungen zu NCO-Gruppen aus den Isocyanatosilanen von 0,8 : 1 bis 1,2 : 1, bevorzugt 0,9 : 1 bis 1,1 : 1, beträgt.

4. Beschichtungsmittel gemäß einem oder mehreren der Ansprüche 1 bis 3, **dadurch gekennzeichnet, dass** es sich bei der Zinn-haltigen Verbindung um eine organische Zinnverbindung der Formel
R¹₄₋ₐSnXₐ
wobei a 1, 2 oder 3 ist, R¹ unabhängig ausgewählt wird aus der Gruppe, die besteht aus linearen oder verzweigten gegebenenfalls substituierten C1-C30-Alkylgruppen-, C5-C14-Cycloalkylgruppen oder C6-C14-Arylgruppen, Triorganylsilyl- sowie C1-C30 Diorganylalkoxysilylgruppen, und X ausgewählt wird aus der Gruppe, die besteht aus Halogen, -OR², -OC(O)R³, -OH, -SR⁴, -NR⁵₂, -NHR⁶, -OSiR⁷₃, -OSi(OR⁸)₃, worin die Substituenten R² bis R⁸ jeweils unabhängig voneinander ausgewählt werden aus gegebenenfalls substituierten C1-C8-Alkyl-, C6-C14-Aryl-und/oder C2-C8-Alkenylgruppen.

5. Beschichtungsmittel gemäß einem oder mehreren der Ansprüche 1 bis 4, **dadurch gekennzeichnet, dass** die Zinn-haltige Verbindung ausgewählt ist aus Di-n-butylzinndichlorid, Di-n-octylzinndichlorid, Di-n-butylzinnoxid, Di-n-octylzinnoxid, Di-n-butylzinndiacetat, Di-n-butylzinndilaurat, Di-n-butylzinnmaleat, Di-n-butylzinn-bis-2-ethylhexanoat, Di-n-butylzinndineodecanoat, Di-n-octylzinndiacetat, Di-n-octylzinndilaurat, Di-n-octylzinnmaleat, Di-n-octylzinn-bis-2-ethylhexanoat, Di-n-octylzinndineodecanoat oder Di-n-butylzinndiacetylacetonat.

6. Beschichtungsmittel gemäß einem oder mehreren der Ansprüche 1 bis 5, **dadurch gekennzeichnet, dass** es sich bei dem Aminosilan um Aminosilane oder Aminoalkylsilane der allgemeinen Formel (III)
AₘSiYₙ (III)
handelt worin
A eine substituierte oder unsubstituierte Aminoalkylgruppe, eine substituierte oder unsubstituierte Diaminodialkylgruppe oder substituierte oder unsubstituierte Triaminotrialkylgruppe darstellt, die Gruppen Y gleich oder verschieden sind, wobei Y für OH, ONa, OK, OR', OCOR', OSiR'₃, Cl, Br, I oder NR'₂ steht, m gleich 1 oder 2 und n gleich 1, 2 oder 3 sind, mit der Maßgabe m+n = 4, wobei die Gruppe R' unabhängig Wasserstoff, lineare oder verzweigte Alkyl-, Cycloalkyl-, Alkenyl-, Cycloalkenyl-, Alkinyl-, Cycloalkinyl-, Aryl- oder Heteroarylgruppen sind, jeweils 1 bis 18 C-Atomen aufweisen und jeweils ggf. substituiert sein können.

7. Beschichtungsmittel gemäß einem oder mehreren der Ansprüche 1 bis 5, **dadurch gekennzeichnet, dass** es zusätzlich Bindemittel-Komponenten, Hilfs- und Zusatzstoffe und/oder Lösemittel enthält.

8. Verwendung von Beschichtungsmitteln gemäß einem der Ansprüche 1 bis 7 zur Beschichtung von Holz, Kunststoff, Glas oder Metall.

9. Beschichtungen enthaltend Beschichtungsmittel gemäß einem oder mehreren der Ansprüche 1 bis 7.

## Claims

1. Coating material at least comprising A) an adduct of isocyanatosilanes with hydroxy-functional compounds, B) a tin-containing compound and C) an aminosilane, where the hydroxy-functional compounds are selected from monoalcohols, which are selected from monofunctional branched or linear alcohols or mixtures thereof having 1 to 22 carbon atoms, diols, which are selected from difunctional branched or linear alcohols or mixtures thereof having 1 to 22 carbon atoms, triols, which are selected from trifunctional branched or linear alcohols or mixtures thereof having 1 to 22 carbon atoms, and tetrols, which are selected from tetrafunctional branched or linear alcohols or mixtures thereof having 1 to 22 carbon atoms, and where the amount of component C) in the coating material is 10 to 20 wt% based on the coating material.

2. Coating material according to Claim 1, **characterized in that** the isocyanatosilane is a compound of the formula (I)
OCN- (alkyl)-Si (alkoxy)₃ (I)
in which alkyl comprises linear or branched alkylene chains having 1-4 carbon atoms, alkoxy: simultaneously or independently of one another methoxy, ethoxy, propoxy or butoxy groups.

3. Coating material according to Claim 1 or 2, **characterized in that** the ratio of OH groups from the hydroxy-functional compounds to NCO groups from the isocyanatosilanes is from 0.8 : 1 to 1.2 : 1, preferably 0.9 : 1 to 1.1 : 1.

4. Coating material according to one or more of Claims 1 to 3, **characterized in that** the tin-containing compound is an organotin compound of the formula
R¹₄₋ₐSnXₐ
where a is 1, 2 or 3, R¹ is independently selected from the group consisting of linear or branched, optionally substituted C1-C30 alkyl groups, C5-C14 cycloalkyl groups or C6-C14 aryl groups, triorganylsilyl groups and also C1-C30 diorganylalkoxysilyl groups, and X is selected from the group consisting of halogen, -OR², -OC(O)R³, - OH, -SR⁴, -NR⁵₂, -NHR⁶, -OSiR⁷₃, -OSi (OR⁸)₃, in which the substituents R² to R⁸ in each case independently of one another are selected from optionally substituted C1-C8 alkyl, C6-C14 aryl and/or C2-C8 alkenyl groups.

5. Coating material according to one or more of Claims 1 to 4, **characterized in that** the tin-containing compound is selected from di-n-butyltin dichloride, di-n-octyltin dichloride, di-n-butyltin oxide, di-n-octyltin oxide, di-n-butyltin diacetate, di-n-butyltin dilaurate, di-n-butyltin maleate, di-n-butyltin bis-2-ethylhexanoate, di-n-butyltin dineodecanoate, di-n-octyltin diacetate, di-n-octyltin dilaurate, di-n-octyltin maleate, di-n-octyltin bis-2-ethylhexanoate, di-n-octyltin dineodecanoate or di-n-butyltin diacetylacetonate.

6. Coating material according to one or more of Claims 1 to 5, **characterized in that** the aminosilane comprises aminosilanes or aminoalkylsilanes of the general formula (III)
AₘSiYₙ (III)
in which
A is a substituted or unsubstituted aminoalkyl group, a substituted or unsubstituted diaminodialkyl group or substituted or unsubstituted triaminotrialkyl group, the groups Y are identical or different, and Y is OH, ONa, OK, OR', OCOR', OSiR'₃, Cl, Br, I or NR'₂ , m is 1 or 2 and n is 1, 2 or 3, with the proviso that m+n = 4, wherein the groups R' are independently hydrogen, linear or branched alkyl, cycloalkyl, alkenyl, cycloalkenyl, alkynyl, cycloalkynyl, aryl or heteroaryl groups, which in each case have 1 to 18 C atoms and may in each case optionally be substituted.

7. Coating material according to one or more of Claims 1 to 5, **characterized in that** it further comprises binder components, auxiliaries and adjuvants and/or solvents.

8. Use of coating materials according to one of Claims 1 to 7 for the coating of wood, plastic, glass or metal.

9. Coatings comprising coating materials according to one or more of Claims 1 to 7.

## Revendications

1. Agent de revêtement contenant au moins A) un adduit d'isocyanatosilanes sur des composés fonctionnalisés par hydroxy, B) un composé contenant de l'étain et C) un aminosilane, les composés fonctionnalisés par hydroxy étant choisis parmi des monoalcools, qui sont choisis parmi des alcools monofonctionnels ramifiés ou linéaires ou des mélanges de ceux-ci comportant 1 à 22 atomes de carbone, des diols, qui sont choisis parmi des alcools difonctionnels ramifiés ou linéaires ou des mélanges de ceux-ci comportant 1 à 22 atomes de carbone, des triols, qui sont choisis parmi des alcools trifonctionnels ramifiés ou linéaires ou des mélanges de ceux-ci comportant 1 à 22 atomes de carbone, et des tétraols qui sont choisis parmi des alcools tétrafonctionnels ramifiés ou linéaires ou des mélanges de ceux-ci comportant 1 à 22 atomes de carbone, et la quantité de composant C) dans l'agent de revêtement étant de 10 à 20 % en poids par rapport à l'agent de revêtement.

2. Agent de revêtement selon la revendication 1, **caractérisé en ce que** l'isocyanatosilane est un composé de formule (I)
OCN-(alkyl)-Si(alcoxy)₃ (I),
dans laquelle alkyl = des chaînes alkylène linéaires ou ramifiées comportant 1 à 4 atomes de carbone, alcoxy = des groupes méthoxy, éthoxy, propoxy ou butoxy, en même temps ou indépendamment les uns des autres.

3. Agent de revêtement selon la revendication 1 ou 2, **caractérisé en ce que** le rapport de groupes OH des composés fonctionnalisés par hydroxy sur les groupes NCO des isocyanatosilanes est de 0,8 : 1 à 1,2 : 1, préférablement de 0,9 : 1 à 1,1 : 1.

4. Agent de revêtement selon l'une ou plusieurs des revendications 1 à 3, **caractérisé en ce que** le composé contenant de l'étain est un composé organique de l'étain de formule
**R¹₄₋ₐSn_{Xa}**
a étant 1, 2 ou 3, R¹ étant indépendamment choisi dans le groupe qui est constitué par des groupes alkyle linéaires ou ramifiés en C1 à C30 éventuellement substitués, des groupes cycloalkyle en C5 à C14 ou des groupes aryle en C6 à C14, des groupes triorganylsilyle ainsi que des groupes diorganylalcoxysilyle en C1 à C30, et X étant choisi dans le groupe qui est constitué par halogène, -OR², -OC(O)R³, -OH, -SR⁴, -NR⁵₂, -NHR⁶, -OSiR⁷₃, - OSi (OR⁸)₃, dans lesquels les substituants R² à R⁸ sont choisis à chaque fois indépendamment les uns des autres parmi des groupes alkyle en C1 à C8, des groupes aryle en C6 à C14 et/ou des groupes alcényle en C2 à C8, éventuellement substitués.

5. Agent de revêtement selon l'une ou plusieurs des revendications 1 à 4, **caractérisé en ce que** le composé contenant de l'étain est choisi parmi le dichlorure de di-n-butylétain, le dichlorure de din-octylétain, l'oxyde de di-n-butylétain, l'oxyde de di-n-octylétain, le diacétate de di-n-butylétain, le dilaurate de di-n-butylétain, le maléate de di-n-butylétain, le bis-2-éthylhexanoate de di-n-butylétain, le dinéodécanoate de di-n-butylétain, le diacétate de di-n-octylétain, le dilaurate de di-n-octylétain, le maléate de di-n-octylétain, le bis-2-éthylhexanoate de di-n-octylétain, le dinéodécanoate de di-n-octylétain et le diacétylacétonate de di-n-butylétain.

6. Agent de revêtement selon l'une ou plusieurs des revendications 1 à 5, **caractérisé en ce qu'**en ce qui concerne l'aminosilane, il s'agit d'aminosilanes ou d'aminoalkylsilanes de formule générale (III)
**AₘSiYₙ** **(III)**
dans laquelle
A représente un groupe aminoalkyle substitué ou non substitué, un groupe diaminodialkyle substitué ou non substitué ou un groupe triaminotrialkyle substitué ou non substitué, les groupes Y sont identiques ou différents, Y représentant OH, ONa, OK, OR', OCOR', OSiR'₃, Cl, Br, I ou NR'₂, m est égal à 1 ou 2 et n est égal à 1, 2 ou 3, à la condition que m + n = 4, le groupe R' étant indépendamment hydrogène, des groupes alkyle linéaires ou ramifiés, cycloalkyle, alcényle, cycloalcényle, alcynyle, cycloalcynyle, aryle ou hétéroaryle, présentant à chaque fois 1 à 18 atomes de C et pouvant à chaque fois être éventuellement substitués.

7. Agent de revêtement selon l'une ou plusieurs des revendications 1 à 5, **caractérisé en ce qu'**il contient de plus des composants de liant, des auxiliaires et des additifs et/ou des solvants.

8. Utilisation d'agents de revêtement selon l'une quelconque des revendications 1 à 7 pour le revêtement de bois, de plastique, de verre ou de métal.

9. Revêtements contenant des agents de revêtement selon l'une ou plusieurs des revendications 1 à 7.
